# EUROPÄISCHE PATENTANMELDUNG

(11) **EP 0 962 879 A2**
(43) Veröffentlichungstag der Anmeldung: **08.12.1999**
(21) Anmeldenummer: 99110574.3
(22) Anmeldetag: 01.06.1999
(51) Int. Cl.: G06K 7/00

(54) **Auswertevorrichtung mit einem Führungskanal für tragbare, kartenförmige Datenträger**

(30) Priorität: 03.06.1998 DE 19824815
(71) Anmelder: SIEMENS AKTIENGESELLSCHAFT, 80333 München (DE)
(72) Erfinder: Brunner, Franz, 82178 Puchheim (DE)

(57) **Zusammenfassung**

Zur Verhinderung des Einführens von münzförmigen Gegenständen (GM, KM) in einen Führungskanal (FK) einer Datenträger-Auswertevorrichtung (KL) weist diese eine federnde Schließvorrichtung (SUT) mit zumindest einem damit verbundenen Öffnungselement (R) auf. Im geschlossenen Zustand der Schließvorrichtung (SUT) ist das eine Auflauffläche aufweisende Öffnungselement (R) in einem für münzförmige Gegenstände (GM, KM) unerreichbaren Randbereich des Führungskanals (FK) angeordnet. Bei Einschieben des kartenförmigen Datenträgers wird die Schließvorrichtung (SUT) aus dem Führungskanal (FK) gedrückt.

## Beschreibung

Bei aktuellen öffentlichen Kartentelefonen erfolgt die Bezahlung der geführten Telefonate mit Hilfe von Magnet- oder Chip-Karten, deren Wert nach einem geführten Gespräch entsprechend den Telefongebühren reduziert wird. Eine alternative Zahlungsvariante stellt das Auslesen von auf den Magnet- oder Chip-Karten gespeicherten Benutzerdaten dar, wobei nachträglich ein Konto des Benutzers entsprechend belastet wird.

Aktuelle Kartenleser zum Auslesen der auf den Magnet- oder Chip-Karten gespeicherten Informationen sind meist als offene Steckleser gebaut, bei denen die Karte im gesteckten Zustand noch sichtbar bleibt und somit wieder entnehmbar ist. Der Kartenleser weist einen Führungskanal zum Einschieben von Magnet- oder Chip-Karten auf, wobei der Führungskanal derart ausgestaltet ist, daß auch eine Prägung aufweisende Karten einschiebbar sind.

Aus dem Gebrauchsmuster G 92 13 283.9 geht beispielsweise ein Kartenleser mit einem Führungskanal für tragbare, kartenförmige Datenträger hervor, welcher eine Schließvorrichtung zum Schließen des Führungskanals aufweist. Ein im Ruhezustand den Führungskanal verschließender Schieber weist zwei in den Randbereichen des Führungskanals senkrecht zum Schieber angeordnete, keilförmige Ansätze auf, wobei unterhalb der Ansätze im Schieber eine Öffnung zur Aufnahme der Karte vorgesehen ist. Beim Einbringen einer ordnungsgemäßen Karte gelangt diese zunächst an den beiden keilförmig zum Einführschlitz verlaufende Ansätze zur Anlage, wodurch der Schieber soweit innerhalb seiner Führung verschoben wird, bis die unterhalb der Ansätze vorgesehene Öffnung im Schieber erreicht ist. Durch diese Öffnung kann dann die Karte in das Kartenleserinnere weiter eingebracht werden. Der Schieber ist so ausgestaltet, daß vor dem Einführen der Karte das Einbringen von Fremdgegenständen (z.B. Papier), die zur Unbrauchbarkeit des Kartenleser führen, sowie das Eindringen von Schmutz und Feuchtigkeit in das Kartenleserinnere verhindert wird.

Da der Prägebereich einer Karte beispielsweise eine Breite von ca. 20 mm und die Kartendicke im Prägebereich eine Höhe von über 1,2 mm aufweisen kann, können an dieser Stelle irrtümlich oder auch absichtlich Münzen oder münzförmige Gegenstände in den an die Prägung der Karte angepaßten Kartenschlitz bzw. Führungskanal des Kartenlesers geschoben werden. Dies führt zu einer Verstopfung des Kartenlesers, was den Ausfall der Geräte bzw. Kartentelefone zur Folge hat. Zur Wiederherstellung der Funktionalität des Kartenlesers ist ein Wartungsvorgang erforderlich.

Um ein absichtliches oder irrtümliches Verstopfen von Kartenlesern durch eingeschobene Münzen zu vermeiden, sind aktuell eingesetzte Kartenleser, sofern der Platz im Gerät ausreichend ist, mit einem ausreichend dimensionierten Innenraum versehen, so daß eingeschobene, münzförmige Gegenstände möglichst beim Einschieben der nächsten Karte in das Geräteinnere geschoben werden und dort bis zum nächsten Wartungsgang liegen bleiben. Die Kartenleser müssen dabei so ausgestaltet sein, daß ins Geräteinnere geschobene, münzförmige Gegenstände beispielsweise keine Kurzschlüsse verursachen.

Der Erfindung liegt die Aufgabe zugrunde, das Einschieben von münzförmigen Gegenständen bei Kartenlesern zum Auslesen von Magnet- oder Chip-Karten zu verhindern. Die Aufgabe wird ausgehend von einer Datenträger-Auswertevorrichtung gemäß dem Oberbegriff des Patentanspruchs 1 durch dessen kennzeichnende Merkmale gelöst.

Die erfindungsgemäße, einen Führungskanal für tragbare, kartenförmige Datenträger aufweisenden Datenträger-Auswertevorrichtung weist eine federnde Schließvorrichtung zum Schließen des Führungskanals und zumindest ein mit der Schließvorrichtung verbundenes Öffnungselement auf, das im geschlossenen Zustand der Schließvorrichtung in einem Randbereich des Führungskanals angeordnet ist und eine zur Schließvorrichtung in Einschieberichtung ansteigende Auflauffläche aufweist. Desweiteren ist vor dem Öffnungselement eine Führungskanalabdeckung vorgesehen. Die Schließvorrichtung und die Auflauffläche sind derart ausgestaltet, daß bei Einschieben des kartenförmigen Datenträgers die Schließvorrichtung aus dem Führungskanal gedrückt wird. Der wesentliche Aspekt der erfindungsgemäßen Datenträger-Auswertevorrichtung besteht darin, daß das Öffnungselement und die Führungskanalabdeckung derart dimensioniert sind, daß das Öffnungselement nicht von in den Führungskanal eingeschobenen münzförmigen Gegenständen erreicht wird.

Der wesentliche Vorteil der erfindungsgemäßen Datenträger-Auswertevorrichtung besteht darin, daß auf einfachste mechanische Weise und damit mit geringstem wirtschaftlichem Aufwand der Einwurf von nicht kartenförmigen Gegenständen - wie beispielsweise münzförmigen Gegenständen - in Vorrichtungen zum Auswerten von Chip- oder Magnet-Karten verhindert wird und somit zusätzliche, mit hohem wirtschaftlichen Aufwand verbundene Wartungsgänge eingespart werden. Durch das Verhindern einer absichtlichen oder irrtümlichen Verstopfung des Kartenlesers bleibt die Funktionalität der Geräte voll erhalten, wodurch Umsatzeinbußen vermieden werden.

Weitere vorteilhafte Ausgestaltungen der erfindungsgemäßen Datenträger-Auswertevorrichtung sind den weiteren Ansprüchen zu entnehmen.

Im folgenden wird ein Ausführungsbeispiel der erfindungsgemäßen Datenträger-Auswertevorrichtung mit Hilfe von drei Zeichnungen näher erläutert. Dabei zeigen:
- FIG 1: eine Haltevorrichtung mit federnder Schließvorrichtung zur Verhinderung des Einführens münzförmiger Gegenstände,
- FIG 2A und FIG 2B: die in einen Führungskanal einer Datenträger-Auswertevorrichtung angeordnete Schließvorrichtung im geschlossenem Zustand und die aus dem Führungskanal gedrückte Schließvorrichtung bei einem in den Führungskanal eingeschobenen, kartenförmigen Datenträger,
- FIG 3A und FIG 3B: eine Darstellung der Schließwirkung der im Führungskanal der Datenträger-Auswertevorrichtung angeordneten Schließvorrichtung bei einem in den Führungskanal eingeschobenen, münzförmigen Gegenstand.

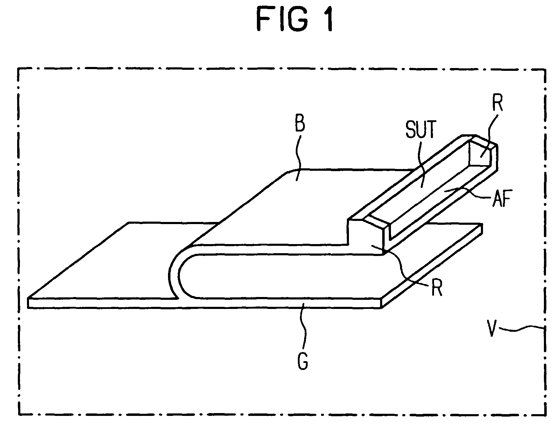

In FIG 1 ist eine Haltevorrichtung V mit angeordneter Schließvorrichtung SUT zur Verhinderung des Einführens von münzförmigen Gegenständen in einen Führungskanal einer Datenträger-Auswertevorrichtung - in FIG 1 nicht abgebildet - skizzenhaft dargestellt. Auf einer Grundplatte G ist ein annähernd U-förmiges Biegeelement bzw. Biegeteil B befestigt, wobei am federnd gelagerten Ende des Biegeteils B eine federnde, als annähernd schräg über das Biegeteil B verlaufende Verschluß-Fläche ausgestaltete Schließvorrichtung SUT - auch als Shutter bezeichnet - angebracht ist. An den seitlichen Rändern der Schließvorrichtung SUT ist jeweils ein annähernd im rechten Winkel zur Schließvorrichtung SUT angeordnetes und jeweils eine Schräge aufweisendes Öffnungselement R - im folgenden auch als Rampe bezeichnet - angebracht, wobei die beiden Öffnungselemente R bezüglich der Einschieberichtung des Führungskanals vor der Schließvorrichtung SUT an den Seitenrändern des U-förmigen Biegeelementes B angeordnet sind. Gemäß FIG 1 sind die Schließvorrichtung SUT und die beiden rampenförmigen, bzw. keilförmigen Öffnungselemente R derart am federnd gelagerten Ende des Biegeteils B angeordnet, daß durch die genannten Elemente SUT, R, B eine Anschlagfläche AF gebildet wird.

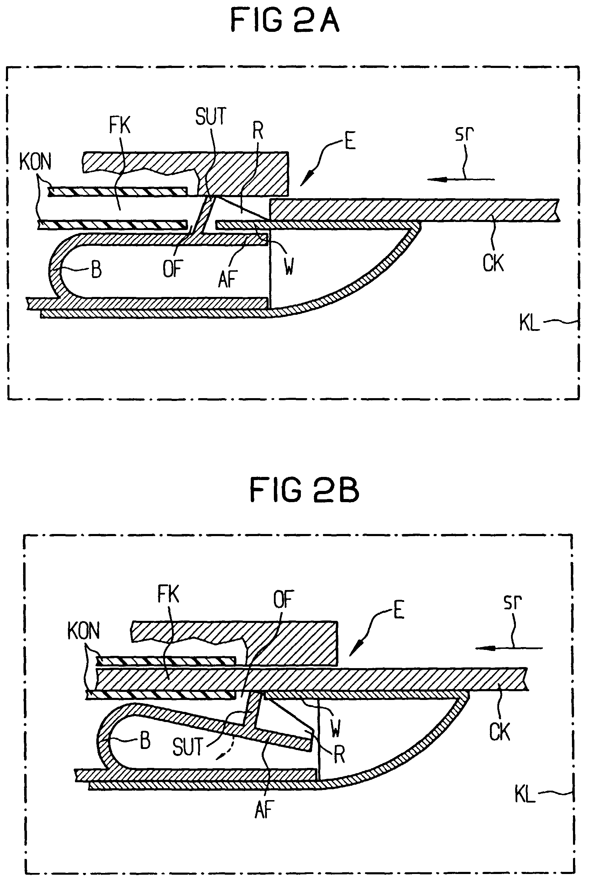

In FIG 2A ist ein Beispiel für die Anordnung der in FIG 1 dargestellten Haltevorrichtung V in einem Gehäuse einer Datenträger-Auswertevorrichtung KL, beispielsweise einem Chip- bzw. Magnetkartenleser - im folgenden als Kartenleser KL bezeichnet -, dargestellt. Der Kartenleser KL ist beispielsweise Bestandteil eines öffentlichen oder privaten Kartentelefons - nicht dargestellt. Gemäß FIG 2A weist der Kartenleser KL eine Kontaktiereinheit KON zum Auslesen oder Bearbeiten von auf einer Chip- oder Magnetkarte CK gespeicherten Informationen auf, wobei die Kontaktiereinheit KON integraler Bestandteil eines im Kartenleser KL angeordneten Führungskanals FK zum Einführen von Chip- oder Magnetkarten ist. Erfindungsgemaß ist die in FIG 1 dargestellte Vorrichtung V derart im Gehäuse des Kartenlesers KL angeordnet bzw. dort arretiert, daß die federnd gelagerte Schließvorrichtung SUT zusammen mit den beiden rampenförmigen Öffnungselementen R in den Führungskanal FK ragen, bzw. dort angeordnet sind. Im unbenutztem Zustand des Kartenlesers KL werden die Schließvorrichtung SUT mit den beiden Öffnungslementen R durch das Biegeelement B der am Gehäuse des Kartenlesers KL arretierten Haltevorrichtung V durch eine im Führungskanal FK angeordnete und entsprechend ausgestaltete Öffnung OF in den Führungskanal FK gedrückt, so daß dieser durch die Schließvorrichtung SUT verschlossen ist. Die am Ende des Biegeteils B angeordnete Anschlagfläche AF wird dabei gegen die Außenwand W des Führungskanals FK gedrückt. In FIG 2A ist beispielhaft eine an einem Eingang E des Führungskanals FK angeordnete Chip- bzw. Magnetkarte CK kurz vor den Einschieben in Schieberichtung sr in den Kartenleser KL bzw. in dessen Führungskanal FK dargestellt.

Im geschlossenen Zustand der Schließvorrichtung SUT sind die beiden keilförmigen Öffnungselemente R jeweils im Randbereich des Führungskanals FK angeordnet, wobei die Schrägen der Öffnungselemente R eine von der Führungskanalrichtung bzw. von der Einschieberichtung sr der Chip- bzw. Magentkarte abweichende Richtung aufweisen. Durch das Einschieben einer Chip- bzw. Magnetkarte CK in den Führungskanal FK des Kartenlesers KL werden die beiden keilförmigen Öffnungselemente R durch die jeweils auf die Schrägen der Rampen R einwirkenden Schiebekräfte nach unten und somit die Schließvorrichtung SUT aus dem Führungskanal FK gedrückt - durch einen strichlierten Pfeil in FIG 2B angedeutet.

Die Chip- bzw. Magentkarte CK ist soweit in den Führungskanal FK des Kartenlesers KL einschiebbar, bis die Kontaktiereinheit KON des Kartenlesers KL mit einer oder mehreren entsprechenden Gegen-Kontaktiereinheiten - nicht dargestellt - der eingeschobenen Karte CK zwecks bidirektionalen Datenaustausch verbunden ist. Die eingeschobene Chipkarte CK kann jederzeit wieder aus dem Führungskanal FK des Kartenlesers KL entnommen bzw. herausgezogen werden, wobei durch das federnd ausgestaltete Biegeteil B bei Herausziehen der Karte CK die Schließvorrichtung SUT zusammen mit den beiden Öffnungselementen R wieder in den Führungskanal FK gedrückt werden und somit der Führungskanal FK wieder verschlossen ist - vgl. FIG 2A.

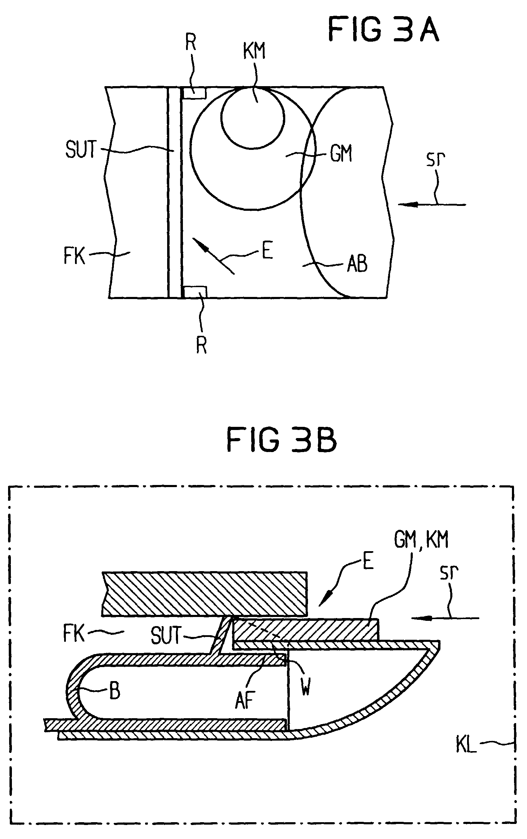

FIG 3A zeigt in einer Draufsicht und FIG 3B in einer Seitenansicht die geschlossene Anordnung der Schließvorrichtung SUT bei einem in den Eingangsbereich E des Führungskanals FK eingeschobenen, münzförmigen Gegenstand GM, KM. Bei einem Einschieben beispielsweise einer einen großen Durchmesser aufweisenden Münze GM in den Eingangsbereich E des Führungskanals FK werden gemäß FIG 3A bei geschlossener Schließvorrichtung SUT die an den Seitenrändern des Führungskanals FK angeordneten, keilförmigen Öffnungselemente R - bzw. deren Schrägen - bedingt durch die große Rundung der Münze GM nicht erreicht, wodurch die Schließvorrichtung SUT erfindungsgemäß nicht nach unten und somit nicht aus dem Führungskanal FK gedrückt werden kann. Vorteilhaft kann die Schließvorrichtung SUT leicht schräg gegen die Einschieberichtung sr des Führungskanals FK, bzw. der Karte CP geneigt sein - vgl. FIG 3B -, wodurch die Sperrwirkung der Schließvorrichtung SUT weiter verbessert wird, da die schräg angeordnete Schließvorrichtung SUT durch den Versuch des Einschiebens bzw. Eindrückens einer Münze GM, KM in den Führungskanal FK durch auf die schräg geneigte Schließvorrichtung SUT einwirkende Schiebekräfte eher stärker in den Führungskanal FK, also in Sperrichtung gedrückt wird.

Gemäß einer in FIG 3A dargestellten, vorteilhaften Ausgestaltung ist im Eingangsbereich E des Führungskanals FK eine Abdeckung AB angeordnet, durch welche das Einschieben von einen kleinen Durchmesser aufweisenden Münzen KM in den Führungskanal FK verhindert und somit ein Einschieben von kleineren Münzen KM eventuell in den Bereich der Schrägen der keilförmigen Öffnungselemente R und ein dadurch mögliches Öffnen bzw. Wegdrücken der Schießvorrichtung SUT aus dem Führungskanal FK unterbunden wird.

## Patentansprüche

1. Datenträger-Auswertevorrichtung (KL), mit einem Führungskanal (FK) für tragbare, kartenförmige Datenträger,
mit einer federnden Schließvorrichtung (SUT) zum Schließen des Führungskanals (FK),
mit zumindest einem mit der Schließvorrichtung (SUT) verbundenen Öffnungselement (R), das im geschlossenen Zustand der Schließvorrichtung (SUT) in einem Randbereich des Führungskanals (FK) angeordnet ist und eine zur Schließvorrichtung (SUT) in Einschieberichtung (sr) ansteigende Auflauffläche aufweist,
mit einer vor dem Öffnungselement (R) vorgesehenen Führungskanalabdeckung (AB),
wobei die Schließvorrichtung (SUT) und die Auflauffläche des Öffnungselementes (R) derart ausgestaltet sind, daß bei Einschieben des kartenförmigen Datenträgers (CK) die Schließvorrichtung (SUT) aus dem Führungskanal (FK) gedrückt wird,
**dadurch gekennzeichnet**,
daß das Öffnungselement (R) und die Führungskanalabdeckung (AB) derart dimensioniert sind, daß das Öffnungselement (R) nicht von in den Führungskanal (FK) eingeschobenen münzförmigen Gegenständen (GM,KM) erreicht wird.

2. Datenträger-Auswertevorrichtung nach Anspruch 1, **dadurch gekennzeichnet**,
daß die Abdeckung (AB) in dem von dem Öffnungselement (R) abgewandten Randbereich eine bogenförmige Aussparung aufweist.

3. Datenträger-Auswertevorrichtung nach einem der vorherigen Ansprüche,
**dadurch gekennzeichnet**,
daß die Schließvorrichtung (SUT) im geschlossenen Zustand eine gegen die Einschieberichtung (sr) gerichtete Neigung aufweist.

4. Datenträger-Auswertevorrichtung nach einem der vorherigen Ansprüche,
**dadurch gekennzeichnet**,
daß die Datenträger-Auswertevorrichtung (KL) in einem öffentlichen oder privaten Karten-Telefon angeordnet ist.
